# EUROPÄISCHE PATENTSCHRIFT

(11) **EP 3 371 565 B1**
(45) Veröffentlichungstag und Bekanntmachung des Hinweises auf die Patenterteilung: **01.01.2020**
(21) Anmeldenummer: 16782250.1
(22) Anmeldetag: 18.10.2016
(51) Int. Cl.: G01K 7/16

(54) **SENSORELEMENT UND VERFAHREN ZUR HERSTELLUNG EINES SENSORELEMENTS**
SENSOR ELEMENT AND METHOD FOR PRODUCING A SENSOR ELEMENT
ÉLÉMENT CAPTEUR ET PROCÉDÉ DE FABRICATION D'UN ÉLÉMENT CAPTEUR

(30) Priorität: 02.11.2015 DE 102015118720; 25.01.2016 DE 102016101247
(43) Veröffentlichungstag der Anmeldung: 12.09.2018
(73) Patentinhaber: TDK Electronics AG, 81671 München (DE)
(72) Erfinder: IHLE, Jan, 8071 Grambach (AT); WEIDENFELDER, Anke, 272-0023 Ichikawa-shi CHIBA-KEN (JP); MEAD, Christl Lisa, 8543 St. Martin i. S. (AT)
(74) Vertreter: Epping - Hermann - Fischer
(86) Internationale Anmeldenummer: PCT/EP2016/074966
(87) Internationale Veröffentlichungsnummer: WO 2017/076639

(56) Entgegenhaltungen:
- DE-A1-102010 050 315
- DE-A1-102012 110 849

## Beschreibung

Es wird ein Sensorelement angegeben. Das Sensorelement kann insbesondere zur Messung einer Temperatur dienen. Beispielsweise handelt es sich um ein NTC-Sensorelement (negative temperature coefficient), also um einen Heißleiter. Ferner werden Verfahren zur Herstellung eines Sensorelements angegeben.

Nach dem Stand der Technik werden Temperaturen für die Überwachung und Regelung in unterschiedlichsten Anwendungen vorwiegend mit keramischen Heißleiter-Thermistorelementen (NTC), Silizium-Temperatursensoren (KTY), Platin-Temperatursensoren (PRTD) oder Thermoelementen (TC) gemessen. Dabei sind auf Grund der geringen Herstellungskosten die NTC-Thermistoren am weitesten verbreitet. Ein weiterer Vorteil gegenüber Thermoelementen und metallischen Widerstandselementen, wie z.B. Pt-Elementen, besteht in der ausgeprägten negativen Widerstands-Temperatur-Charakteristik. Beispiele sind in DE 10 2010 050315 A1 und DE 10 2012 110849 A1 zu finden.

Für den Einsatz in Leistungsmodulen werden vorwiegend SMD NTC-Temperatursensoren verwendet, die aufgelötet werden. Bei Steuermodulen für geringe Leistungen werden alternativ dazu auch NTC-Chips eingesetzt, die an der Unterseite mittels Ag-Sintern, Löten oder Kleben montiert sind und deren Oberseite über einen Bonddraht kontaktiert wird.

Für eine elektrische Kontaktierung der NTC-Keramik müssen metallische Elektroden aufgebracht werden. Nach dem Stand der Technik werden dazu Dickschichtelektroden vorwiegend aus Silber- oder Gold-Pasten über einen Siebdruckprozess mit anschließendem Einbrand aufgebracht. Die Silber-Metallisierungen eignen sich besonders für AG-Sinter- und Lötverbindungen. Aufgrund der steigenden technologischen Anforderungen hinsichtlich neuer zuverlässiger Anschlußkontaktierungen wie Bonden und Schweißen, ist speziell beim Bonden mit Gold- oder Aluminium- bzw. Kupferdrähten eine andere Elektrode notwendig, da eine Anbindung an Silber keine ausreichende Zuverlässigkeit aufweist.

Im Falle von Gold-Metallisierungen können Lötverbindungen zu Anschlussdrähten nicht realisiert werden. Bondverbindungen werden aus Kostengründen nur mit Gold-Dünndraht realisiert. Aluminium-Bonddrahtverbindungen auf Gold-Elektroden erreichen nicht die Zuverlässigkeitsanforderungen.

Gegenwärtig erfolgt die Temperaturmessung bei Leistungsmodulen mit aufgelöteten SMD NTC-Sensoren. Aufgrund der steigenden Anforderungen bezüglich Einsatztemperatur und Zuverlässigkeit besteht die Forderung nach NTC-Temperatursensoren, die ohne Lötmontage auf die Platine aufgebracht werden können und die eine hohe Langzeitstabilität aufweisen sowie für höhere Einsatztemperaturen geeignet sind.

Eine geeignete Montage stellt Ag-Sintern mit feindispersen Silberpasten dar, das jedoch unter Druck durch eine Auflast erfolgt. Dazu ist eine ausreichende mechanische Stabilität der Bauelemente bei Flip Chip Montage erforderlich, damit die auftretenden Biegespannungen nicht zum Bruch führen bzw. es zu keinen Anschädigungen (Rissen) kommt. Herkömmliche NTC Sensorkeramiken weißen meist eine zu geringe Biegefestigkeit auf, um den auftretenden Belastungen standzuhalten.

Eine zu lösende Aufgabe besteht darin, ein Sensorelement anzugeben, welches verbesserte Eigenschaften aufweist.

Diese Aufgabe wird durch ein Sensorelement gemäß der unabhängigen Ansprüche gelöst.

Gemäß einem Aspekt wird ein Sensorelement zur Temperaturmessung angegeben. Das Sensorelement weist ein keramisches Sensormaterial auf. Das Sensormaterial ist eine NTC Keramik. Beispielsweise weist die Keramik eine Perowskitstruktur auf. Insbesondere kann die Keramik auf dem System Y-Ca-Cr-Al-O mit diversen Dotierungen beruhen. Alternativ kann das Sensorelement eine Keramik mit einer Spinellstruktur aufweisen. Beispielsweise kann die Keramik auf dem System Ni-Co-Mn-O mit diversen Dotierungen beruhen. Das Sensorelement ist ein NTC-Sensorchip.

Das Sensorelement ist dazu vorgesehen mittels Ag-Drucksintern auf einer Leiterplatte bzw. einem DCB Board befestigt zu werden. Insbesondere ist das Sensorelement dazu ausgebildet mittels Ag-Sintern auf der Leiterplatte montiert zu werden. Eine Bauform des Sensorelements ist so ausgebildet, dass eine Druckbeaufschlagung auf das Sensorelement während des Drucksinterns kompensiert wird.

Durch die erfindungsgemäße Bauform wird die mechanische Stabilität des Sensorelementes erhöht. Das Drucksintern des Bauteils wird dadurch ermöglicht ohne etwaige Beschädigungen wie Mikrorisse oder ähnliches zu induzieren oder gar einen Bruch des Bauteils zu bewirken. Damit wird ein besonders stabiles Sensorelement bereitgestellt, das ohne Lötmontage auf der Leiterplatte aufgebracht werden kann.

Gemäß einem Ausführungsbeispiel weist das Sensorelement wenigstens eine Elektrode auf. Vorzugsweise weist das Sensorelement zwei Elektroden auf. Daneben kann das Sensorelement auch noch eine keramische Verstärkung oder einen keramischen Träger aufweisen. Die Elektroden sind auf dem keramischen Sensormaterial angeordnet.

Vorzugsweise sind die Elektroden räumlich voneinander separiert. Das bedeutet, dass zwischen den Elektroden ein Abstand besteht. Beispielsweise ist zwischen den Elektroden keramisches Sensormaterial angeordnet. Das Sensorelement ist so ausgebildet, dass die beim Ag-Drucksintern auftretende Druckbelastung in einem Zwischenbereich zwischen den Elektroden auf die Leiterplatte abgeleitet wird. Insbesondere werden die beim Ag-Drucksintern wirkenden Kräfte mit Hilfe des Zwischenbereichs zwischen den Elektroden kompensiert.

Somit wird ein NTC-Temperatursensor mit zum Ag-Sintern geeigneten Elektroden bereitgestellt, wobei der Sensor so geformt ist, dass die Druckbelastung beim Ag-Sintern größtenteils im Zwischenbereich der Elektroden auf die Platine abgeleitet wird und Schädigungen durch Biegebelastung bei der Montage vermieden werden.

Erfindungsgemäß weist das Sensorelement eine T-förmige Bauform auf. Insbesondere weist das Sensorelement einen Abschnitt auf, welcher einem horizontalen Strich oder Balken eines "T" entspricht. Ferner weist das Sensorelement einen Abschnitt auf, welcher einem vertikalen Strich oder Balken eines "T" entspricht. Die beiden Abschnitte sind unlösbar miteinander verbunden. Die beiden Abschnitte sind vorzugsweise einstückig ausgeführt.

Durch die T-förmige Bauform wird die mechanische Stabilität des Sensorelementes erhöht. Das Ag-Drucksintern des Bauteils wird dadurch ermöglicht ohne etwaige Beschädigungen wie Mikrorisse oder ähnliches zu induzieren oder gar einen Bruch des Bauteils zu bewirken.

Gemäß einem Ausführungsbeispiel weist das Sensorelement einen keramischen Grundkörper auf. Der keramische Grundkörper weist das keramische Sensormaterial auf. Die Elektroden sind auf einer Außenfläche des Grundkörpers angeordnet. Die Elektroden sind vorzugsweise auf einer gemeinsamen Außenfläche des Sensorelements bzw. des Grundkörpers angeordnet. Die gemeinsame Außenfläche stellt vorzugsweise eine Unterseite des Sensorelements bzw. des Grundkörpers dar.

Der Grundkörper weist einen Vorsprung auf. Der Vorsprung bildet einen integralen Bestandteil des Grundkörpers. Mit anderen Worten, Vorsprung und Grundkörper sind einstückig ausgebildet. Insbesondere weist der Vorsprung keramisches Sensormaterial auf. Der Vorsprung ist zwischen den Elektroden angeordnet. Der Vorsprung bildet einen Zwischenbereich zwischen den Elektroden.

Vorzugsweise ist der Vorsprung sockelförmig ausgebildet. Der Vorsprung stellt beispielsweise den vertikalen Strich eines "T" dar, während der Rest des Grundkörpers den horizontalen Strich oder Balken des "T" darstellt. Der Vorsprung ragt zwischen den Elektroden aus der Außenfläche bzw. der Unterseite des Sensorelements hervor.

Durch den im Zwischenbereich zwischen den Elektroden angeordneten Vorsprung oder Sockel, werden die beim Ag-Drucksintern auftretenden Kräfte auf die Leiterplatte abgeleitet. Eine Schädigung des Sensorelements durch Biegebelastung kann somit verhindert werden.

Gemäß einem Ausführungsbeispiel weist das Sensorelement einen keramischen Grundkörper auf. Der keramische Grundkörper weist das keramische Sensormaterial auf. Die Elektroden sind an unterschiedlichen Stirnflächen des Sensorelements angeordnet. Die Elektroden sind an gegenüberliegenden Stirnflächen angeordnet. Vorzugsweise sind die Elektroden an den Stirnflächen als Kappen aufgebracht.

Das Sensorelement weist ferner ein keramisches Trägermaterial auf. Der Grundkörper ist auf dem Trägermaterial ausgebildet. Vorzugsweise bedeckt der Grundkörper eine Außenfläche des Trägermaterials, z.B. eine Oberseite des Trägermaterials, vollständig.

Das Trägermaterial weist einen Vorsprung auf. Der Vorsprung bildet einen integralen Bestandteil des Trägermaterials. Mit anderen Worten, Trägermaterial und Vorsprung sind einstückig ausgebildet. Insbesondere weist der Vorsprung keramisches Trägermaterial auf. Der Vorsprung ist zwischen den Elektroden angeordnet. Der Vorsprung bildet einen Zwischenbereich zwischen den Elektroden. Der Vorsprung ist sockelförmig ausgebildet. Der Vorsprung ragt zwischen den Elektroden und aus einer Außenfläche des Sensorelements hervor.

Wie oben beschrieben weist das Sensorelement eine T-förmige Bauform auf. Insbesondere verfügt das Sensorelement über einen Vorsprung oder Sockel. Der Vorsprung oder Sockel ragt von einer Oberfläche des Sensorelements hervor. Der Vorsprung oder Sockel ist vorzugsweise zwischen den Elektroden ausgebildet. Der Vorsprung oder Sockel kann keramisches Sensormaterial und/oder ein Material der keramischen Verstärkung aufweisen. Die Bauform des Sensorelements ist so abgestimmt bzw. ausgebildet, dass eine Druckbeaufschlagung auf das Sensorelement während des Herstellungs- bzw. Montageprozesses kompensiert wird. Ferner wird eine mechanische Biegebelastung auf ein Minimum reduziert.

Gemäß einem Aspekt werden Verfahren zur Herstellung eines Sensorelements beschrieben. Vorzugsweise wird durch das jeweilige Verfahren das oben beschriebene Sensorelement hergestellt. Alle Eigenschaften, die in Bezug auf das Sensorelement oder das Verfahren offenbart sind, sind auch entsprechend in Bezug auf die jeweiligen anderen Aspekte offenbart und umgekehrt, auch wenn die jeweilige Eigenschaft nicht explizit im Kontext des jeweiligen Aspekts erwähnt wird.

Das Verfahren weist die folgenden Schritte auf:
- Herstellung von NTC-Pulver zur Ausbildung eines keramischen Grundkörpers.
- Pressen des NTC-Pulvers. Dazu wird eine Pressform verwendet. Die Pressform ist derart ausgebildet, dass der gepresste Grundkörper einen Vorsprung aufweist. Die Pressform ist derart ausgebildet, dass der gepresste Grundkörper eine T-förmige Bauform aufweist.
- Sintern des gepressten Grundkörpers.
- Aufbringen von Elektroden auf eine Unterseite des Grundkörpers. Dies kann mittels Dünnschicht- oder Dickschichttechnologie erfolgen. Die Elektroden sind durch den Vorsprung voneinander getrennt.

Gemäß einem weiteren Aspekt weist das Verfahren die folgenden Schritte auf:
- Bereitstellen eines keramischen Trägermaterials. Das Trägermaterial weist einen Vorsprung auf.
- Zumindest teilweises Bedrucken des Trägermaterials mit einer NTC-Paste zu Ausbildung einer NTC-Schicht. Vorzugsweise wird eine Oberfläche des Trägermaterials mit NTC-Paste bedruckt, die dem Sockel gegenüberliegt. Beispielsweise wird eine Oberseite des Trägermaterials mit NTC-Paste bedruckt. Beispielsweise ist der Vorsprung auf der gegenüberliegenden Seite, also der Unterseite des Trägermaterials, angeordnet. Alternativ kann der Vorsprung des Trägermaterials auch erst nach dem Bedrucken des Trägermaterials mit der NTC-Paste ausgebildet werden.
- Sintern des Systems aus Trägermaterial und NTC-Paste.
- Aufbringen von Elektroden. Die Elektroden werden auf gegenüberliegende Stirnflächen des Systems aus NTC-Schicht und Trägermaterial angeordnet. Die Elektroden sind durch den Vorsprung voneinander getrennt. Damit ein elektrischer Kontakt zwischen den Montageflächen der Trägerkeramik und der NTC-Schicht zustande kommt, sind die Elektroden als Kappen über die Stirnflächen ausgebildet.

Gemäß einem Aspekt wird ein Sensorelement zur Temperaturmessung angegeben, wobei das Sensorelement eine T-förmige Bauform aufweist, und wobei die Bauform des Sensorelements so ausgebildet ist, dass eine Druckbeaufschlagung auf das Sensorelement während des Herstellungsprozesses kompensiert wird.

Sensorelement und Verfahren werden im Folgenden anhand von Ausführungsbeispielen und den dazugehörigen Figuren näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.
- Figur 1: zeigt ein Sensorelement in einer ersten Ausführungsform,
- Figur 2: zeigt ein Sensorelement in einer weiteren Ausführungsform,
- Figur 3: zeigt ein Sensorelement in einer weiteren Ausführungsform,
- Figur 4: zeigt eine Ausführung des Sensorelements aus Figur 3.

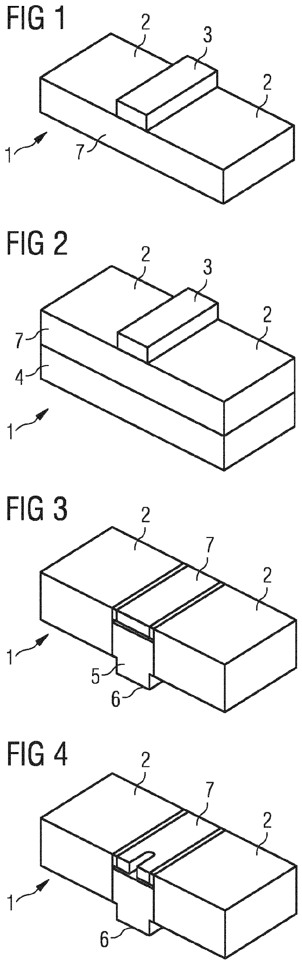

Die Figur 1 zeigt ein Sensorelement 1, insbesondere einen Sensorchip. Das Sensorelement 1 ist vorzugsweise zur Messung einer Temperatur ausgebildet. Das Sensorelement 1 weist zwei Elektroden 2 auf. Das Sensorelement 1 weist ein keramisches Sensormaterial auf. Das Sensorelement 1 weist einen keramischen Grundkörper 7 auf. Der Grundkörper 7 weist das keramische Sensormaterial auf.

Das Sensormaterial ist eine NTC (Negative-Temperature-Coefficient) Keramik. Beispielsweise weist die Keramik eine Perowskitstruktur auf. Insbesondere kann die Keramik auf dem System Y-Ca-Cr-Al-O mit diversen Dotierungen beruhen. Ein derartiges Sensorelement 1 eignet sich besonders für Hochtemperaturanwendungen. Alternativ kann das Sensorelement 1, insbesondere bei geringeren Anwendungstemperaturen, eine Keramik mit einer Spinellstruktur aufweisen. Beispielsweise kann die Keramik auf dem System Ni-Co-Mn-O mit diversen Dotierungen beruhen.

Das Sensorelement 1 ist dazu ausgebildet unter Druck auf einer Leiterplatte befestigt zu werden, beispielsweise mittels Ag-Sintern. Ein Ag-Sintern unter Druckbeaufschlagung ist bei den herkömmlichen SMD NTC-Sensoren als auch alternativen Flip-Chip Bauformen aufgrund der auftretenden Biegebelastungen, die die Eigenfestigkeit der Bauelemente übersteigt, nicht möglich. Die Biegebelastung entsteht, indem auf das Bauteil, das auf den Anschlusspads auf der Platine aufliegt von oben gedrückt wird. Zwischen den Anschlusspads befindet sich speziell im Falle von DCB Boards ein relativ tiefer Graben, der der Elektrodenschichtdicke auf dem DCB Board entspricht und die in der Regel mehrere 100µm beträgt.

Um die beim Ag-Sintern auftretenden Druckbelastungen zu kompensieren, weist das Sensorelement 1 aus Figur 1 einen Sockel 3 auf. Das Sensorelement 1 ist T-förmig ausgebildet. Gemäß dem Ausführungsbeispiel aus Figur 1 ist insbesondere der keramische Grundkörper 7 T-förmig ausgebildet. Der horizontale Strich des "T" bildet in diesem Ausführungsbeispiel eine Oberseite des Sensorelements 1 bzw. des Grundkörpers 7. Der vertikale Strich des "T" stellt den Sockel 3 dar. Der Sockel 3 ragt aus einer Unterseite des Sensorelements 1 bzw. Grundkörpers 7 heraus. Der Sockel 3 ist integraler Bestandteil des Grundkörpers 7.

Das Sensorelement 1 mit Sockel 3 kann entweder direkt durch Pressen mit geeigneter Pressform hergestellt oder aus einem Pressling bzw. einem aus NTC-Folien hergestellten Substrat in T-Form getrennt werden. Dies kann durch Sägen, Schleifen, Lasertrennen oder andere geeignete mechanische Bearbeitungen realisiert werden.

Die Metallisierung wird als Dünn- oder Dickschichtelektrode aufgebracht. Die Elektroden 2 sind durch den Sockel 3 voneinander getrennt bzw. räumlich separiert.

Die Elektroden 2 werden auf der Unterseite rechts und links vom Sockel 3 insbesondere mittels Sputtern, Aufdampfen oder Siebdruck aufgebracht. Die Elektroden 2 sind auf der gleichen Außenfläche (hier die Unterseite) des Sensorelements 1 angeordnet.

Um bei dem AG-Drucksinterprozess eine gute Anhaftung zu erreichen, ist eine ebenfalls aus Ag bestehende Elektrode von Vorteil. Es können allerdings auch andere Elektrodenmaterialien, wie zum Beispiel Au, Cu, Al etc. verwendet werden, sofern diese Ag-sinterbar sind oder sich mit einem anderen Standardprozess verarbeiten lassen.

Die Herstellung von Dünnschichtelektroden kann durch Sputtern oder Aufdampfen erfolgen. Dabei besteht die Basiselektrode in einer ersten Ausführung aus einer Nickelschicht, die Anteile von Vanadium aufweisen kann oder in einer zweiten Ausführungsform aus zwei Schichten, wobei die untere Schicht Chrom oder Titan aufweist und die zweite Schicht aus Nickel besteht, die ebenfalls Anteile von Vanadium aufweisen kann.

Die Basiselektrode kann durch eine Deckschicht bestehend aus einem oxidationshemmenden Metall wie z.B. Silber, Gold, Kupfer, Aluminium etc. geschützt werden. Diese Deckelektrode kann entweder zum reinen Korrosionsschutz (Oxidation) der Nickel-Basiselektrode dienen oder auch für die Kontaktierung vorteilhaft bzw. sogar notwendig sein. Im Falle einer Anbindung mittels Ag-Sintern mit feindispersen Silberpasten ist zum Beispiel eine Silber-Deckelektrode unerlässlich.

Die Dicke der Basiselektrode beträgt weniger als 10 µm, vorteilhafterweise weniger als 3 µm, idealerweise weniger als 0,5 µm. Die Dicke der Deckelelektrode kann bis zu 1 µm, in Ausnahmefällen bis zu 20 µm betragen.

Die Herstellung von Dickschichtelektroden kann durch ein Siebdruckprozess mit anschließendem Einbrand erfolgen. Die eingesetzten Pasten können Ag oder etwaige Beimischungen enthalten.

Durch einen Trennprozess wird die endgültige Geometrie hergestellt. Im Falle von sehr eng tolerierten Widerständen kann ein Trimmprozess zur Einstellung des Widerstandes bei Nenntemperatur durch partiellen Laserabtrag erfolgen. Die Kontaktierung des Sensorelements 1 zum DCB Board bzw. der Leiterplatte oder der Platine kann mittels Ag-Sintern, Löten oder Kleben erfolgen.

Das Sensorelement 1 (Pressling) gemäß diesem Ausführungsbeispiel wird beispielsweise auf folgende Weise hergestellt:
In einem ersten Schritt wird NTC-Pulver hergestellt. Darunter sind beispielsweise Einwaage, Naß-Vormahlung, Trocknung, Siebung, Kalzination, Naß-Nachmahlung, Sprühen erfasst. Danach erfolgt das Pressen des Sprühgranulats. Die Pressform ist dabei so ausgebildet, dass beim Pressen ein T-förmiger Grundkörper entsteht.

In einem weiteren Schritt folgt das Entkohlen des Presslings. Danach wird der Pressling gesintert.

Es erfolgt die Aufbringen von Ni/Ag-Dünnschichtelektroden 2 mittels Sputtertechnologie auf die Unterseiten rechts und links vom Sockel 3, wie oben beschrieben. Die Elektroden 2 sind durch den Sockel 3 voneinander separiert.

Um die Langzeitstabilität der Keramik zu verbessern, kann in einem weiteren Schritt über den unmetallisierten Bereich eine dünne nicht leitende Schutzschicht aufgebracht werden, die z.B. aus Keramiken, Gläsern, Kunststoffen oder Metalloxiden besteht. Diese kann durch Sputtern, Aufdampfen, Lithographie oder Aufdrucken und Einbrennen erzielt werden.

Danach erfolgt das elektrische Messen der Widerstände der einzelnen Sensorelemente 1 mit Sockel 3 bei Nenntemperatur. Zur Widerstandseinstellung werden die metallisierten Substrate elektrisch vorgemessen. Anhand der Vormessdaten wird die Geometrie der NTC-Sensor Chips mit Sockel definiert. Da die Länge fixiert ist, bleibt als variable Größe die Breite als Einstellparameter.

In einem weiteren Schritt erfolgt ein Trimmen des einzelnen Sensorelements 1 mit Sockel 3 auf den geforderten Widerstandswert durch vollflächiges Schleifen einer Seite. Für besonders eng tolerierte Widerstände bei Nenntemperatur kann mit dem zusätzlichen Trimmprozess der Widerstand der einzelnen Bauelemente eingestellt werden (siehe hierzu auch Figur 4). Dabei wird Keramikmaterial oder Elektrodenmaterial durch z.B. Laserschneiden oder Schleifen partiell so entfernt, dass durch die Geometrieveränderung der Widerstand angepasst wird.

In einem letzten Schritt folgt eine visuelle Inspektion und stichprobenartige Kontrollmessung.

Figur 2 zeigt ein verstärktes Sensorelement 1 mit Sockel 3. Der Aufbau entspricht im Wesentlichen dem Sensorelement 1 aus Figur 1. Jedoch weist das Sensorelement 1 eine zusätzliche keramische Schicht 4 auf der Oberseite (der dem Sockel 3 gegenüberliegenden Seite) auf. Der Grundkörper 7 ist auf der keramischen Schicht 4 angeordnet. Insbesondere bedeckt die keramische Schicht 4 die Oberseite des Grundkörpers 7 vorzugsweise vollständig. Die keramische Schicht 4 dient als mechanische Verstärkung für Prozesse mit besonders hohen Beanspruchungen. Der Aufbau wird realisiert durch Pressen von Granulat oder von gestapelten Folien. Gepresst wird die NTC Keramik entweder zusammen oder nacheinander mit der keramischen Schicht 4. Die Herstellung des Sensorelements 1 gemäß Figur 2 erfolgt im Übrigen wie in Zusammenhang mit Figur 1 beschrieben.

Figur 3 zeigt ein mit Sensormaterial (NTC-Schichten) bedrucktes Trägermaterial 5 mit Sockel 6. Die NTC-Schichten stellen in diesem Ausführungsbeispiel den Grundkörper 7 dar.

Auf das keramische Trägermaterial 5 werden die NTC-Schichten aufgedruckt. Das Trägermaterial 5 ist T-förmig ausgestaltet. Insbesondere weist das Trägermaterial 5 den Sockel 6 auf, wobei der Sockel den vertikalen Strich des "T" darstellt. Der Sockel 6 ist integraler Bestandteil des Trägermaterials 5.

Das keramische Trägermaterial 5 besteht auf Basis von z.B. Al₂O₃, ZrO₂, ATZ- bzw. ZTA-Materialien oder MgO. Das Trägermaterial 5 kann vor oder nach dem Bedrucken mit NTC-Paste in entsprechende Form gebracht und nach dem Sintern vereinzelt werden oder bereits als Einzelteil vorliegen.

Die Elektroden 2 werden an den Stirn- bzw. Seitenflächen aufgebracht. Insbesondere werden die Elektroden 2 als Kappen aufgebracht. Dies ermöglicht das Kontaktieren dieser Bauform auf die Leiterplatte bzw. Platine bzw. das DCB Board. Da sich das Sensormaterial (die NTC-Schicht) aber nicht in direktem Kontakt mit den Pads befindet, ist die Kappenform der Elektroden 2 erforderlich, um eine Kontaktierung der NTC-Schicht zu gewährleisten.

Figur 4 zeigt einen getrimmten NTC-Sensor auf einem Trägermaterial 5 mit Sockel 6. Durch den Trimmprozess wurde Sensormaterial abgetragen zur Einstellung des Widerstandes bei Nenntemperatur. Der Abtrag erfolgt durch partiellen Laserabtrag, wie bereits oben beschrieben.

Gemäß allen in den Figuren 1 bis 4 gezeigten Ausführungsbeispielen weist das Sensorelement 1 eine T-förmige Bauform auf. Die beim Drucksintern auf das Bauteil wirkenden hohen Kräfte werden durch die gewählte Bauform kompensiert und die mechanische Biegebelastung auf ein Minimum reduziert. Insbesondere wird die Druckbelastung beim Ag-Sintern größtenteils im Zwischenbereich der Elektroden 2 auf die Platine abgeleitet, wodurch Schädigungen durch Biegebelastung bei der Montage vermieden werden.

Die Verwendung von keramischen Trägermaterialien auf Basis von z.B. Al₂O₃, ZrO₂, ATZ- bzw. ZTA Materialien oder MgO kann zu einer weiteren Erhöhung der mechanischen Stabilität führen.

Für den Einsatz auf Platinen bzw. DCB Boards können die in den Figuren 1 bis 4 gezeigten Sensorelemente 1 auf die Leiterbahnen gesintert werden. Dies kann unter Druck oder drucklos erfolgen. Eine Montage durch Kleben oder Löten ist nach wie vor gegeben.

Die Beschreibung der hier angegebenen Gegenstände ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Sensorelement
- 2: Elektrode
- 3: Vorsprung / Sockel
- 4: Keramische Schicht
- 5: Trägermaterial
- 6: Sockel
- 7: Grundkörper

## Patentansprüche

1. Sensorelement (1) zur Temperaturmessung,
wobei das Sensorelement (1) dazu vorgesehen ist mittels Drucksintern auf einer Leiterplatte befestigt zu werden, und **dadurch gekennzeichnet dass** das Sensorelement (1) eine T-förmige Bauform aufweist.

2. Sensorelement (1) nach Anspruch 1,
wobei das Sensorelement (1) wenigstens zwei Elektroden (2) aufweist, und wobei das Sensorelement (1) so ausgebildet ist, dass die beim Drucksintern auftretende Druckbelastung in einem Zwischenbereich zwischen den Elektroden (2) auf die Leiterplatte abgeleitet wird.

3. Sensorelement (1) nach einem der Ansprüche 1 oder 2, aufweisend einen keramischen Grundkörper (7), wobei die Elektroden (2) auf einer Außenfläche des Grundkörpers (7) angeordnet sind, wobei der Grundkörper (7) einen Vorsprung (3) aufweist, und wobei der Vorsprung (3) zwischen den Elektroden (2) angeordnet ist.

4. Sensorelement (1) nach Anspruch 3,
wobei die Elektroden (2) auf einer gemeinsamen Außenfläche des Sensorelements (1) angeordnet sind, wobei die gemeinsame Außenfläche eine Unterseite des Sensorelements (1) darstellt.

5. Sensorelement (1) nach Anspruch 3 oder 4,
wobei der Vorsprung (3) sockelförmig ausgebildet ist, und wobei der Vorsprung (3) zwischen den Elektroden (2) aus der Außenfläche des Sensorelements (1) hervorragt.

6. Sensorelement (1) nach einem der Ansprüche 3 bis 5,
wobei der Vorsprung (3) einen integralen Bestandteil des Grundkörpers (7) bildet.

7. Sensorelement (1) nach einem der Ansprüche 1 oder 2, aufweisend einen keramischen Grundkörper (7) und ein keramisches Trägermaterial (5), wobei der Grundkörper (7) auf dem Trägermaterial (5) ausgebildet ist, wobei das Trägermaterial (5) einen Vorsprung (6) aufweist, und wobei der Vorsprung (6) zwischen den Elektroden (2) angeordnet ist.

8. Sensorelement (1) nach Anspruch 7,
wobei die Elektroden (2) an unterschiedlichen Stirnflächen des Sensorelements (1) angeordnet sind.

9. Sensorelement (1) nach Anspruch 8,
wobei die Elektroden (2) an den Stirnflächen als Kappen aufgebracht sind.

10. Sensorelement (1) nach einem der Ansprüche 7 bis 9,
wobei der Vorsprung (6) sockeiförmig ausgebildet ist, und wobei der Vorsprung (6) zwischen den Elektroden (2) und aus einer Außenfläche des Sensorelements (1) hervorragt.

11. Sensorelement (1) nach einem der Ansprüche 7 bis 10,
wobei der Vorsprung (6) einen integralen Bestandteil des Trägermaterials (5) bildet.

12. Verfahren zur Herstellung eines Sensorelements (1) gemäß einem der Ansprüche 1-11 aufweisend die folgenden Schritte:
- Herstellung von NTC-Pulver zur Ausbildung eines keramischen Grundkörpers (7);
- Pressen des NTC-Pulvers, wobei eine Pressform derart ausgebildet ist, dass der gepresste Grundkörper (7) einen Vorsprung (3) aufweist;
- Sintern des gepressten Grundkörpers (7);
- Aufbringen von Elektroden (2) auf eine Unterseite des Grundkörpers (7), wobei die Elektroden (2) durch den Vorsprung (3) voneinander getrennt sind.

13. Verfahren zur Herstellung eines Sensorelements (1) aufweisend die folgenden Schritte:
- Bereitstellen eines keramischen Trägermaterials (5), wobei das Trägermaterial (5) einen Vorsprung (6) aufweist;
- Zumindest teilweises Bedrucken des Trägermaterials (5) mit einer NTC-Paste zu Ausbildung einer NTC-Schicht;
- Aufbringen von Elektroden (2) auf gegenüberliegende Stirnflächen des Systems aus NTC-Schicht und Trägermaterial (5), wobei die Elektroden (2) durch den Vorsprung (6) voneinander getrennt sind.

## Claims

1. A sensor element (1) for temperature measurement,
wherein the sensor element (1) is provided to be attached to a printed circuit board by pressure sintering, and **characterised in that** the sensor element (1) has a T-shaped design.

2. The sensor element (1) according to claim 1,
wherein the sensor element (1) has at least two electrodes (2), and wherein the sensor element (1) is formed such that the compression load occurring during pressure sintering is dissipated in an intermediate region between the electrodes (2) on the printed circuit board.

3. The sensor element (1) according to one of claims 1 or 2, comprising a ceramic base body (7), wherein the electrodes (2) are arranged on an outer surface of the base body (7), wherein the base body (7) has a protrusion (3), and wherein the protrusion (3) is arranged between the electrodes (2).

4. The sensor element (1) according to claim 3,
wherein the electrodes (2) are arranged on a common outer surface of the sensor element (1), wherein the common outer surface represents a lower side of the sensor element (1).

5. The sensor element (1) according to claim 3 or 4,
wherein the protrusion (3) is formed in a plinth shape, and wherein the protrusion (3) projects from the outer surface of the sensor element (1) between the electrodes (2) .

6. The sensor element (1) according to one of claims 3 to 5,
wherein the protrusion (3) forms an integral part of the base body (7).

7. The sensor element (1) according to one of claims 1 or 2, comprising a ceramic base body (7) and a ceramic carrier material (5), wherein the base body (7) is formed on the carrier material (5), wherein the carrier material (5) has a protrusion (6), and wherein the protrusion (6) is arranged between the electrodes (2).

8. The sensor element (1) according to claim 7,
wherein the electrodes (2) are arranged on different front surfaces of the sensor element (1).

9. The sensor element (1) according to claim 8,
wherein the electrodes (2) are mounted on the front surfaces as caps.

10. The sensor element (1) according to one of claims 7 to 9,
wherein the protrusion (6) is formed in a plinth shape, and wherein the protrusion (6) projects between the electrodes (2) and from an outer surface of the sensor element (1).

11. The sensor element (1) according to one of claims 7 to 10,
wherein the protrusion (6) forms an integral part of the carrier material (5).

12. A method of producing a sensor element (1) according to one of claims 1 to 11, comprising the following steps:
- producing NTC powder to form a ceramic base body (7);
- pressing the NTC powder, wherein a compression mould is formed such that the pressed base body (7) has a protrusion (3);
- sintering the pressed base body (7);
- mounting electrodes (2) on a lower side of the base body (7), wherein the electrodes (2) are separated from each other by the protrusion (3).

13. A method of producing a sensor element (1) comprising the following steps:
- providing a ceramic carrier material (5), wherein the carrier material (5) has a protrusion (6);
- at least partially printing the carrier material (5) with an NTC paste to form an NTC layer;
- mounting electrodes (2) on opposite front surfaces of the system composed of NTC layer and carrier material (5), wherein the electrodes (2) are separated from each other by the protrusion (6).

## Revendications

1. Élément capteur (1) pour la mesure de la température, l'élément capteur (1) étant prévu pour être fixé sur une carte de circuits imprimés par frittage sous pression, et **caractérisé en ce que** l'élément capteur (1) présente une forme de construction en T.

2. Élément capteur (1) selon la revendication 1,
dans lequel l'élément capteur (1) comporte au moins deux électrodes (2), et dans lequel l'élément capteur (1) est conçu de telle sorte que la contrainte de pression se produisant pendant le frittage sous pression est déviée dans une zone intermédiaire entre les électrodes (2) sur la carte de circuits imprimés.

3. Élément capteur (1) selon la revendication 1 ou 2, comportant un corps de base (7) en céramique, dans lequel les électrodes (2) sont disposées sur une surface extérieure du corps de base (7), le corps de base (7) comportant une saillie (3) et la saillie (3) étant disposée entre les électrodes (2).

4. Élément capteur (1) selon la revendication 3,
dans lequel les électrodes (2) sont disposées sur une surface extérieure commune de l'élément capteur (1), la surface extérieure commune représentant une face inférieure de l'élément capteur (1).

5. Élément capteur (1) selon la revendication 3 ou 4,
dans lequel la saillie (3) est conçue en forme de socle, et dans lequel la saillie (3) dépasse depuis la surface extérieure de l'élément capteur (1) entre les électrodes (2) .

6. Élément capteur (1) selon l'une des revendications 3 à 5,
dans lequel la saillie (3) fait partie intégrante du corps de base (7).

7. Élément capteur (1) selon la revendication 1 ou 2, comportant un corps de base (7) en céramique et un matériau support (5) en céramique, le corps de base (7) étant réalisé sur le matériau support (5), le matériau support (5) comportant une saillie (6) et la saillie (6) étant disposée entre les électrodes (2).

8. Élément capteur (1) selon la revendication 7,
dans lequel les électrodes (2) sont disposées sur différentes surfaces frontales de l'élément capteur (1).

9. Élément capteur (1) selon la revendication 8,
dans lequel les électrodes (2) sont appliquées sur les surfaces frontales sous la forme de capuchons.

10. Élément capteur (1) selon l'une des revendications 7 à 9,
dans lequel la saillie (6) est conçue en forme de socle, et dans lequel la saillie (6) dépasse entre les électrodes (2) et depuis une surface extérieure de l'élément capteur (1) .

11. Élément capteur (1) selon l'une des revendications 7 à 10,
dans lequel la saillie (6) fait partie intégrante du matériau support (5).

12. Procédé de fabrication d'un élément capteur (1) selon l'une des revendications 1 à 11,
comportant les étapes suivantes :
- fabrication de poudre à CTN pour réaliser un corps de base (7) en céramique ;
- pressage de la poudre à CTN, un moule de pressage étant conçu de telle manière que le corps de base (7) pressé comporte une saillie (3) ;
- frittage du corps de base (7) pressé ;
- application d'électrodes (2) sur une face inférieure du corps de base (7), les électrodes (2) étant séparées l'une de l'autre par la saillie (3).

13. Procédé de fabrication d'un élément capteur (1), comportant les étapes suivantes :
- préparation d'un matériau support (5) en céramique, le matériau support (5) comportant une saillie (3) ;
- impression au moins partielle du matériau support (5) avec une pâte à CTN pour former une couche à CTN ;
- application d'électrodes (2) sur des faces frontales opposées du système constitué de la couche à CTN et du matériau support (5), les électrodes (2) étant séparées l'une de l'autre par la saillie (6).
